# EUROPÄISCHE PATENTSCHRIFT

(11) **EP 1 621 074 B1**
(45) Veröffentlichungstag und Bekanntmachung des Hinweises auf die Patenterteilung: **13.07.2011**
(21) Anmeldenummer: 05009402.8
(22) Anmeldetag: 29.04.2005
(51) Int. Cl.: A01K 27/00

(54) **Führleine, insbesondere für Pferde oder Hunde**
Leash, in particular for horses or dogs
Laisse, en particulier pour les chiens et chevaux

(30) Priorität: 27.07.2004 DE 202004011756 U
(43) Veröffentlichungstag der Anmeldung: 01.02.2006
(73) Patentinhaber: Luber, Josef, 92253 Schnaittenbach (DE)
(72) Erfinder: Luber, Josef, 92253 Schnaittenbach (DE)
(74) Vertreter: Glück, Martin

(56) Entgegenhaltungen:
- US-A- 5 915 336
- US-B1- 6 712 026
- US-B1- 6 827 045

## Beschreibung

Zum Führen von Tieren wie beispielsweise Pferden oder Hunden, sind Führleinen aus unterschiedlichen Materialien, beispielsweise Nylon, Wolle, Hanf, Naturfasern oder Leder bekannt, welche über ein Befestigungselement, beispielsweise ein aus Kunststoff oder Metall oder einem ähnlichen Material gefertigtes Hakenelement an einem Halsband, Geschirr oder Halfter befestigt werden.

Derartige Führleinen werden hierbei vom Pferde- oder Hundeführer durch die Innenhandfläche geführt und mit Finger und Daumen umschlossen. Somit besteht ein unmittelbarer Kontakt zwischen dem Leinenelement der Führleine und der Handinnenfläche bzw. den Fingern und dem Daumen der Hand. Zum Verladen von Pferden oder zum kurzzeitigen Führen werden häufig kurze, d.h. 1,5 bis 3 m lange Führleinen, auch Anbindestricke genannt, verwendet, welche über ein hakenartiges Befestigungselement unmittelbar am Halfter des Pferdes befestigt werden. Ferner sind Führleinen bzw. Longierleinen, auch Loungen genannt, zum Longieren von Pferden auf der Koppel bekannt, die eine Länge von 5 bis 15 m aufweisen können.

Oftmals scheut jedoch das Pferd beim Führen und reißt den Kopf zur Seite, so dass ein ruckartiger Zug an der Führleine entsteht. Dem von der ruckartigen Bewegung des Pferdes überraschten Pferdeführer verbleibt nahezu keine Reaktionszeit, um die Hand zu öffnen bzw. die Führleine bzw. den Anbindestrick los zu lassen. Durch das verspätete Loslassen der Führleine und den ruckartigen Zug des Pferdes an der Leine wird die Führleine über eine beachtliche Länge, beispielsweise ca. 1 m oder mehr durch die Hand des Pferdeführers geschliffen. Aufgrund der rasanten ruckartigen Zugbewegung sowie der beachtlichen Länge des durch die Hand geschliffenen Führleinenabschnitts entstehen nicht selten Verbrennungen der Handinnenfläche oder einzelner Finger. In Einzelfällen können auch schmerzliche Abschürfungen einzelner Hautpartien der Handinnenfläche auftreten, welche einer ärztlichen Behandlung bedürfen.

Aus der US 6,827,045 B1 ist bereits eine Führleine bestehend aus einem Leinenelement sowie einem mit diesem verbundenen Befestigungselement bekannt, bei dem ein aus Schaumstoff hergestelltes Gleitgriffelement vorgesehen ist, welches verschiebbar am Leinenelement angeordnet ist.

Die US 6,712,026 B1 offenbart eine Führleine für Tiere, die aus zumindest einem Leinenelement und einem mit dem Leinenelement verbundenen Befestigungselement besteht, wobei die Führleine ein das Leinenelement umgebendes Gleitgriffelement aufweist. Das Gleitgriffelement umfasst eine Rückenplatte, an dessen Unterseite ein elastischer Belag vorgesehen ist.

Aufgabe der vorliegenden Erfindung ist es, eine Führleine, insbesondere für Pferde, Hunde oder ähnliche Tiere anzugeben, welche die zuvor beschriebenen Nachteile vermeidet.

Zur Lösung dieser Aufgabe ist eine Führleine entsprechend dem Patentanspruch 1 ausgebildet.

Die erfindungsgemäße Führleine besteht aus einem mit einem Befestigungselement verbundenen Leinenelement und einem das Leinenelement umgebenden, elastischen Gleitgriffelement, dass zur Aufnahme zumindest eines Abschnittes des Leinenelementes zumindest einen Führungskanal mit einen sich entlang der Mittelachse des elastischen Gleitgriffelementes erstreckenden trichterförmigen oder treppenförmigen Verlauf umfasst. Ferner weist das elastische Gleitgriffelement eine vorzugsweise ringförmige Wulst bzw. Ausbauchung auf. Das Gleitgriffelement bildet einen Haltegriff, der sich entlang der Führleine verschieben lässt und der insbesondere bei einem ruckartigen Ziehen der Führleine das Leinenelement durch den Führungskanal des Gleitgriffes gleiten lässt ohne das hierdurch die das elastische Gleitgriffelement umgreifende Hand des Pferdeführers verbrannt oder verletzt wird.

Vorteilhafte Weiterbildungen der erfindungsgemäßen Führleine sind den weiteren Unteransprüchen zu entnehmen.

Die Erfindung wird im Folgenden anhand von mehreren Ausführungsbeispielen sowie zugehöriger Figuren näher beschrieben.

Hierbei zeigen:
- Fig. 1: beispielhaft in Seitenansicht die erfindungsgemäße Führleine;
- Fig. 2: einen Schnitt entlang der Linie I-I durch das elastische Gleitgriffelement der erfindungsgemäßen Führleine gemäß Figur 1;
- Fig. 3: beispielhaft jeweils in Querschnittsdarstellung mehrere alternative Ausführungsformen des elastischen Gleitgriffelementes;
- Fig. 4: beispielhaft jeweils in Seitenansicht weitere alternative Ausführungsformen des elastischen Gleitgriffelementes;
- Fig. 5: beispielhaft im Längsschnitt entlang der Linie II-II unterschiedliche Ausbildungen des Führungskanals des elastischen Gleitgriffelementes;
- Fig. 6: beispielhaft ein durch Abknicken mit der Leine fixiertes elastisches Gleitgriffelement.

In den Figuren wird mit 1 eine Führleine, insbesondere Pferde- oder Hundeführleine bezeichnet, welche beispielhaft aus einem Leinenelement 2 sowie einem mit diesem verbundenen Befestigungselement 3 besteht. Das Befestigungselement 3 kann beispielsweise als ein aus Kunststoff oder Metall gefertigtes Hakenelement ausgebildet sein. Das beispielsweise als Seil oder Strick ausgebildete Leinenelement 2 der Führleine 1 weist ein die Leine 2 umgebendes elastisches Gleitgriffelement 4 auf.

Das elastische Gleitgriffelement 4 ist beispielsweise hülsenartig bzw. hohlzylinderförmig ausgebildet und weist einen entlang der Mittelachse M verlaufenden Führungskanal 5 zur Führung der Leine 2 auf. Der Durchmesser D_{F} des Führungskanals 5 ist hierbei jeweils an den Leinendurchmesser D_{L} angepasst bzw. derart gewählt, dass das elastische Gleitgriffelement 4 zwar an der Leine 2 gehalten wird, jedoch auch entlang der Leine 2 verschiebbar ist. Beispielsweise weist der Führungskanals 5 einen Durchmesser D_{F} zwischen 8 mm und 25 mm auf. Die Wandstärke Dw des elastischen Gleitgriffelements 5 kann je nach äußerer Form und Abschnitt des elastischen Gleitgriffelements 5 zwischen 5 mm und 25 mm variieren. Das elastische Gleitgriffelement 4 weist ferner beispielsweise eine Länge zwischen 10 und 30 cm auf.

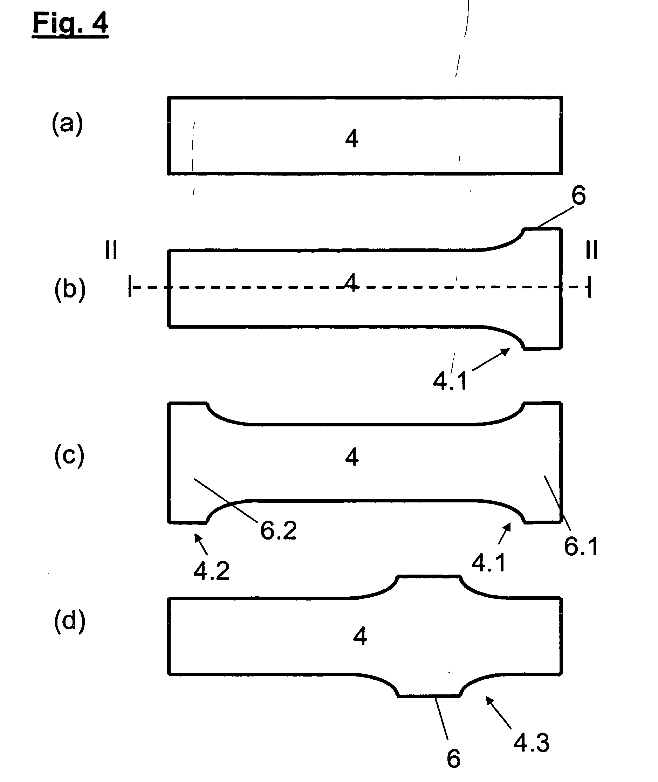

Das elastische Gleitgriffelement 4 besitzt ferner eine konzentrisch zur Mittelachse M verlaufende Oberfläche 8, wobei der Außendurchmesser D_{A} des elastischen Gleitgriffelements 5 in einer Ausführungsform entlang der Mittelachse M zumindest abschnittsweise konstant gehalten wird. Hierdurch ergibt sich ein zumindest abschnittsweise röhrenförmiges bzw. hohlzylinderförmiges Gleitgriffelement 5 (siehe Figur 4a). Die Oberfläche 8 des Gleitgriffelementes 4 ist in einer bevorzugten Ausführungsform rutschfest ausgebildet, d.h. es werden auf der Oberfläche 8 des elastischen Gleitgriffelementes 4 unterschiedliche Profile, Vertiefungen und/oder Material- oder Stoffschichten zur Erhöhung der Rutschfestigkeit vorgesehen.

In einer alternativen Ausführungsform ist an zumindest am ersten oder zweiten freien Ende 4.1, 4.2 oder im Randbereich 4.3 des elastischen Gleitgriffelementes 4 eine Wulst bzw. Ausbauchung 6, 6.1, 6.2 vorgesehen, deren Durchmesser D_{RW} größer als der Außendurchmesser D_{A} ist. Diese bildet somit einen entgegen der Zugrichtung wirkenden Widerstand aus, der ein Abrutschen der das elastische Gleitgriffelement 4 umgebenden Hand verhindert. Hierzu wird das elastische Gleitgriffelement 4 derart auf das Leinenelement 2 aufgeschoben, dass beispielsweise das die Wulst 6 aufweisende erste freie Ende 4.1 des elastischen Gleitgriffelementes 4 vom Befestigungselement 3 abgewandt ist, wohingegen das zweite freie Ende 4.2 zum Befestigungselement 3 zeigt. Alternativ kann sowohl am ersten als auch am zweiten freien Ende 4.1, 4.2 des elastischen Gleitgriffelementes 4 eine Wulst bzw. Ausbauchung 6.1, 6.2 vorgesehen sein.

Das elastische Gleitgriffelement 4 ist beispielsweise aus Kunststoff, Leder, Kautschuk oder einem ähnlichen elastischen Material gefertigt und einstückig ausgebildet. Insbesondere bei Verwendung von Kunststoff sollte dieser eine Shore-Härte kleiner 35 aufweisen. Alternativ kann das elastische Gleitgriffelement 4 jedoch auch mehrteilig ausgebildet sein, dass aus einzelnen beweglich miteinander verbundenen Gleitgriffteilen besteht, welche aus zumindest einem der genannten elastischen Materialien oder einer Kombination dieser oder in Kombination mit weiteren Materialien wie Holz, Metall, Kunststoff etc. hergestellt werden.

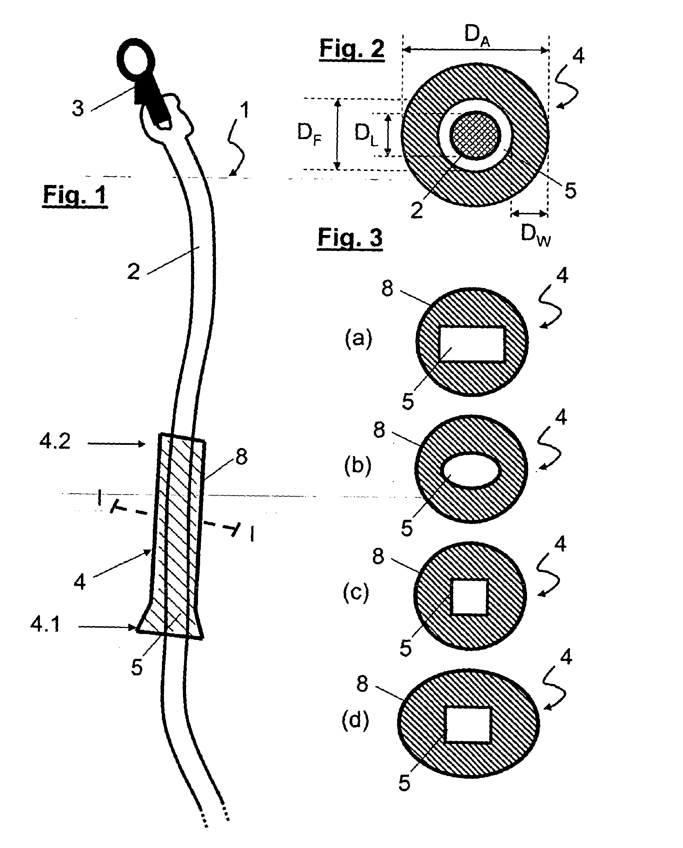

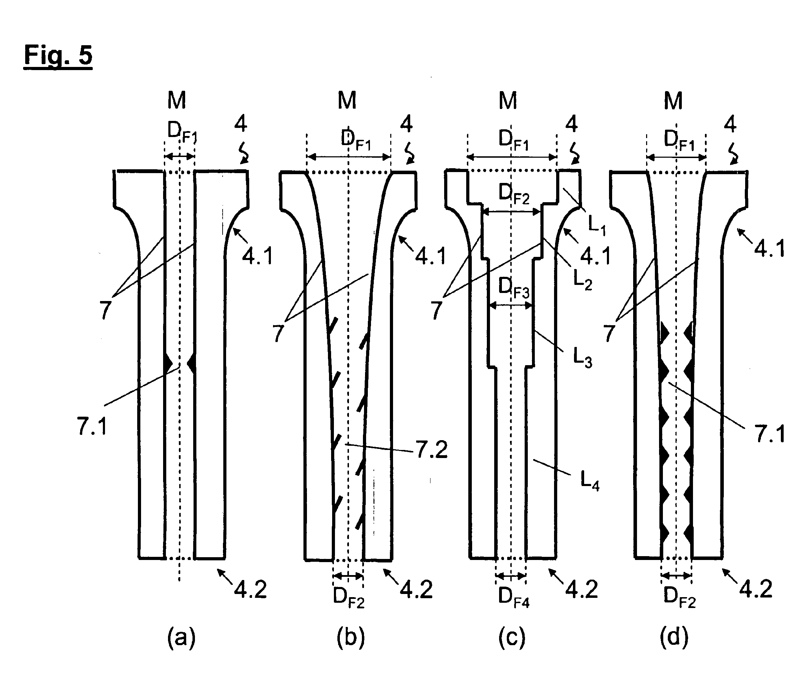

Der Führungskanal 5 kann hierbei unterschiedliche Ausbildungen aufweisen. Beispielsweise kann der Führungskanal 5 im Querschnitt rund, rechteckig, oval, dreieckig, rautenförmig oder quadratisch (siehe hierzu Fig. 3a - 3d) ausgebildet sein. Auch kann der Führungskanal 5 im Querschnitt ein Polygon ausbilden. Insbesondere kann der Führungskanal 5 beispielsweise zur Erhöhung der Gleitreibung zwischen dem Leinenelement 2 und dem elastischen Gleitgriffelement 4 an seiner Innenfläche 7 zur Mittelachse M des stabförmigen Gleitgriffelementes 4 wegstehende Verankerungselemente 7.1, 7.2 aufweisen. Die Verankerungselemente 7.1, 7.2 können beispielsweise als Noppenelemente 7.1 oder hakenartige Elemente 7.2 ausgebildet sein. In einer bevorzugten Ausführungsform gemäß Figur 5 (a) weist das stabförmige Gleitgriffelementes 4 zumindest zwei Noppenelemente bzw. Ausbauchungen 7.1 auf.

Ferner weist der Führungskanal 5 im Längsschnitt entlang einer parallel zur Mittelachse verlaufenden Schnittebene entlang der Linie II - II einen zylinderförmigen (siehe hierzu Fig. 5a) oder einen trichterförmigen Verlauf auf (siehe hierzu Fig. 5b und 5d). In einer alternativen Ausführungsform gemäß Fig. 5c kann der Führungskanal 5 treppenförmig ausgebildet sein, d.h. der Führungskanal 5 umfasst mehrere Führungskanalabschnitte 5.1, 5.2, 5.3. 5.4, welches jeweils einen unterschiedlichen Durchmesser D_{F1}, D_{F2}, D_{F3}, D_{F4} und/ oder unterschiedliche Längen L₁ bis L₄ aufweisen. Sowohl bei der trichterförmigen als auch bei der stufenförmigen Ausbildung des Führungskanals 5 nimmt der jeweilige Durchmesser D_{F1}, D_{F2}, D_{F3}, D_{F4} vom ersten zum zweiten freien Ende 4.1, 4.2 ab.

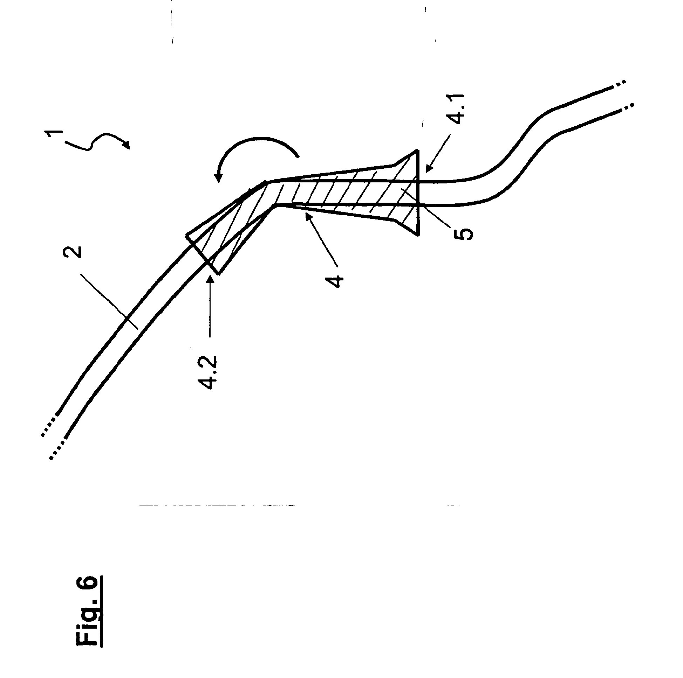

Aufgrund der elastischen Ausbildung des Gleitgriffelementes 4 ist eine Fixierung des elastischen Gleitgriffelementes 4 mit dem als Seil oder Strick ausgebildeten Leinenelement 2 durch ein Abknicken des Gleitgriffelementes 4 - wie in Fig. 6 dargestellt - möglich. Über eine einfache, leichtgängige Knickbewegung, vorzugsweise in dem Befestigungselement zugewandeten Abschnitt des Gleitgriffelementes 4 kann hierdurch das Gleitgriffelementes 4 stärker am Leinenelement 2 fixiert werden, welches ein sicheres Halten beispielsweise eines Pferdes ermöglicht.

Das Leinenelement 2 kann aus unterschiedlichen Materialien wie beispielsweise Nylon, (geflochtene) Wolle, Leder, Hanf oder aus weiteren Naturfasern hergestellt sein und/oder mehrere unterschiedliche Abschnitte aufweisen. Beispielsweise kann ein erster Abschnitt des Leinenelementes 2 der Führleine 1 als Kettenelement ausgebildet sein, wobei der zweite das elastische Gleitgriffelement 4 aufnehmende Abschnitt aus einem der zuvor beschriebenen Materialen gefertigt ist.

Die Erfindung wurde voranstehend an einem Ausführungsbeispiel beschrieben. Es versteht sich, dass zahlreiche Änderungen und Modifikationen möglich sind, ohne dass dadurch der der Erfindung zugrunde liegende Erfindungsgedanke verlassen wird. Beispielsweise können pro Leinenelement 2 zwei elastische Gleitgriffelemente 4 vorgesehen sein, um die Haltekraft zu erhöhen..

### Bezugszeichenliste

- 1: Führleine
- 2: Leinenelement
- 3: Befestigungselement
- 4: elastisches Gleitgriffelement
- 4.1: erstes freies Ende
- 4.2: zweites freies Ende
- 4.3: Randbereich
- 5: Führungskanal
- 6, 6.1, 6.2: Wulst
- 7: Innenfläche des Führungskanals
- 7.1: Verankerungselemente
- 7.2: Verankerungselemente
- 8: Oberfläche des Gleitgriffelementes
- M: Mittelachse
- D_{A}: Außendurchmesser
- D_{F}: Durchmesser des Führungskanals
- D_{F1}: Durchmesser eines ersten Abschnitts des Führungskanals
- D_{F2}: Durchmesser eines zweiten Abschnitts des Führungskanals
- D_{F3}: Durchmesser eines dritten Abschnitts des Führungskanals
- D_{F4}: Durchmesser eines vierten Abschnitts des Führungskanals
- D_{L}: Leinendurchmesser
- D_{RW}: Durchmesser der Wulst
- D_{W}: Wandstärke
- L₁ - L₄: jeweilige Länge des ersten - vierten Abschnitt

## Patentansprüche

1. Führleine, insbesondere für Pferde oder Hunde bestehend aus zumindest einem Leinenelement (2) und einem mit dem Leinenelement (2) verbundenen Befestigungselement (3), bei dem die Führleine (1) ein das Leinenelement (2) umgebendes elastisches Gleitgriffelement (4) aufweist,
**dadurch gekennzeichnet,**
**dass** das elastische Gleitgriffelement (4) zur Aufnahme zumindest einen Abschnittes des Leinenelementes (2) zumindest einen Führungskanal (5) mit einen sich entlang der Mittelachse (M) des elastischen Gleitgriffelementes (4) erstreckenden trichterförmigen oder treppenförmigen Verlauf aufweist und
**dass** das elastische Gleitgriffelement (4) eine vorzugsweise ringförmige Wulst bzw. Ausbauchung (6, 6.1, 6.2) aufweist.

2. Führleine nach Anspruch 1, **dadurch gekennzeichnet, dass** das elastische Gleitgriffelement (4) einen verschiebbaren Haltegriff bildet, der über den zumindest einen Führungskanal (5) mit dem Leinenelement (2) beweglich verbunden ist.

3. Führleine nach Anspruch 1 oder 2, **dadurch gekennzeichnet, dass** die Wulst bzw.
Ausbauchung (6, 6.1, 6.2) an zumindest einem freien Ende (4.1, 4.2) oder in einem Randbereich (4.3) des elastischen Gleitgriffelementes (4) vorgesehen ist.

4. Führleine nach einem der vorhergehenden Ansprüche, **dadurch gekennzeichnet, dass** an der Innenfläche (7) des elastischen Gleitgriffelementes (4) zumindest zwei vorzugsweise radial nach innen wegstehende Verankerungselemente (7.1, 7.2) vorgesehen sind.

5. Führleine nach einem der vorhergehenden Ansprüche, **dadurch gekennzeichnet, dass** der Führungskanal (5) einen rechteckförmigen, runden, ovalen, dreieckförmigen, rautenförmigen, quadratischen oder polygonen Querschnitt aufweist.

6. Führleine nach einem der vorhergehenden Ansprüche, **dadurch gekennzeichnet, dass** das Leinenelement (2) aus Nylon, Leder, geflochtener Wolle, Hanf oder einer weiteren Naturfaser hergestellt ist.

7. Führleine nach einem der vorhergehenden Ansprüche, **dadurch gekennzeichnet, dass** das elastische Gleitgriffelement (4) aus Kunststoff, Leder, Kautschuk oder einem ähnlichen elastischen Material hergestellt ist.

8. Führleine nach einem der vorhergehenden Ansprüche, **dadurch gekennzeichnet, dass** das elastische Gleitgriffelement (4) einstückig oder mehrteilig ausgebildet ist.

9. Führleine nach einem der vorhergehenden Ansprüche, **dadurch gekennzeichnet, dass** das elastische Gleitgriffelement (4) aus einer Kombination aus zumindest zwei elastischen Materialen oder einem elastischen und ein einem unelastischen Material hergestellt ist.

10. Führleine nach einem der vorhergehenden Ansprüche, **dadurch gekennzeichnet, dass** die Führleine (1) zumindest zwei elastische Gleitgriffelemente (4) aufweist.

11. Führleine nach einem der vorhergehenden Ansprüche, **dadurch gekennzeichnet, dass** das Leinenelement (2) der Führleine (1) mehrere Abschnitte aufweist, wobei zumindest ein Abschnitt als Kettenelement ausgebildet ist.

12. Führleine nach einem der vorhergehenden Ansprüche, **dadurch gekennzeichnet, dass** das elastische Gleitgriffelement (4) eine rutschfeste Oberfläche (8) aufweist.

## Claims

1. Leash, especially for horses or dogs, consisting of at least one leash element (2) and one fastening element (3) connected to the leash element (2) wherein the leash (1) has a resilient sliding grip element (4) which surrounds the leash element (2), **characterised in that** the resilient sliding grip element (4) has in order to contain at least one section of the leash element (2) at least one guide channel (5) having a funnel-shaped or stepped path extending along the centre axis (M) of the resilient sliding grip element (4) and that the resilient sliding grip element (4) has a preferably annular-shaped bead or bulge (6, 6.1, 6.2).

2. Leash according to claim 1 **characterised in that** the resilient sliding grip element (4) forms a displaceable handle which is connected to the leash element (2) where it is movable by way of the at least one guide channel (5).

3. Leash according to claim 1 or 2 **characterised in that** the bead or bulge (6, 6.1, 6.2) is provided at at least one free end (4.1, 4.2) or in a peripheral area (4.3) of the resilient sliding grip element (4).

4. Leash according to one of the preceding claims **characterised in that** at least two preferably radially inwardly protruding anchorage elements (7.1, 7.2) are provided on the inside surface (7) of the resilient sliding grip element (4).

5. Leash according to one of the preceding claims **characterised in that** the guide channel (5) has a rectangular, circular, oval, triangular, diamond-shaped, square or polygonal cross-section.

6. Leash according to one of the preceding claims **characterised in that** the leash element (2) is made from nylon, leather, braided wool, hemp or another natural fibre.

7. Leash according to one of the preceding claims **characterised in that** the resilient sliding grip element.(4) is made from plastics, leather, rubber or a similar resilient material.

8. Leash according to one of the preceding claims **characterised in that** the resilient sliding grip element (4) is made in one piece or in several pieces.

9. Leash according to one of the preceding claims **characterised in that** the resilient sliding grip element (4) is made from a combination of at least two resilient materials or one resilient and one non-resilient material.

10. Leash according to one of the preceding claims **characterised in that** the leash (1) has at least two resilient sliding grip elements (4).

11. Leash according to one of the preceding claims **characterised in that** the leash element (2) of the leash (1) has several sections wherein at least one section is formed as a chain element.

12. Leash according to one of the preceding claims **characterised in that** the resilient sliding grip element (4) has a non-slip surface (8).

## Revendications

1. Laisse, en particulier pour chevaux ou chiens, constituée d'au moins une lanière (2) et d'un élément de fixation (3) relié à la lanière (2), dans lequel la laisse (1) présente un élément de préhension coulissant (4) élastique entourant la lanière (2),
**caractérisée en ce que**
l'élément de préhension coulissant (4) élastique présente pour la réception d'au moins une section de la lanière (2), au moins un canal de guidage (5) avec une allure en forme d'escalier ou de trémie s'étendant le long de l'axe médian (M) de l'élément de préhension coulissant (4) élastique et **en ce que** l'élément de préhension coulissant (4) élastique présente un renflement ou bombement (6, 6.1, 6.2) de préférence annulaire.

2. Laisse selon la revendication 1, **caractérisée en ce que** l'élément de préhension coulissant (4) élastique forme une poignée de retenue coulissante qui est reliée de manière mobile à la lanière (2) par le biais de l'au moins un canal de guidage (5).

3. Laisse selon la revendication 1 ou 2, **caractérisée en ce que** le renflement ou bombement (6, 6.1, 6.2) est prévu à au moins une extrémité libre (4.1, 4.2) ou au niveau d'un bord (4.3) de l'élément de préhension coulissant (4) élastique.

4. Laisse selon l'une quelconque des revendications précédentes, **caractérisée en ce qu'**au moins deux éléments d'ancrage (7.1, 7.2) de préférence en saillie radiale vers l'intérieur sont prévus au niveau de la surface intérieure (7) de l'élément de préhension coulissant (4) élastique.

5. Laisse selon l'une quelconque des revendications précédentes, **caractérisée en ce que** le canal de guidage (5) présente une section transversale rectangulaire, circulaire, ovale, triangulaire, rhomboïdale, carrée ou polygonale.

6. Laisse selon l'une quelconque des revendications précédentes, **caractérisée en ce que** la lanière (2) est en nylon, cuir, laine tressée, chanvre ou autre fibre naturelle.

7. Laisse selon l'une quelconque des revendications précédentes, **caractérisée en ce que** l'élément de préhension coulissant (4) élastique est en plastique, cuir, caoutchouc ou matière élastique similaire.

8. Laisse selon l'une quelconque des revendications précédentes, **caractérisée en ce que** l'élément de préhension coulissant (4) élastique est réalisé d'un seul tenant ou formé de plusieurs parties.

9. Laisse selon l'une quelconque des revendications précédentes, **caractérisée en ce que** l'élément de préhension coulissant (4) élastique est fabriqué à partir d'une combinaison d'au moins deux matériaux élastiques ou d'un matériau élastique et d'un matériau non élastique.

10. Laisse selon l'une quelconque des revendications précédentes, **caractérisée en ce que** la laisse (1) présente au moins deux éléments de préhension coulissants (4) élastiques.

11. Laisse selon l'une quelconque des revendications précédentes, **caractérisée en ce que** la lanière (2) de la laisse (1) présente plusieurs sections, dont au moins une section est réalisée sous forme de chaîne.

12. Laisse selon l'une quelconque des revendications précédentes, **caractérisée en ce que** l'élément de préhension coulissant (4) élastique présente une surface antidérapante (8).
